**Europäisches Patentamt**

**European Patent Office**

**Office européen des brevets**

(11) Numéro de publication: **0 163 966**
**A1**

# DEMANDE DE BREVET EUROPEEN

) Numéro de dépôt: **85105552.5**

) Date de dépôt: **07.05.85**

(51) Int. Cl.⁴: **B 64 D 17/00**

---

) Priorité: **10.05.84  FR 8407210**

(71) Demandeur: **PARACHUTES DE FRANCE S.A., 30, rue Letort, F-75018 Paris (FR)**

) Date de publication de la demande: **11.12.85 Bulletin 85/50**

(72) Inventeur: **Auvray, Michel, Parachutes de France 30 rue Letort, F-75018 Paris (FR)**

(84) Etats contractants désignés: **AT BE CH DE FR GB IT LI LU NL SE**

(74) Mandataire: **Weinmiller, Jürgen et al, Zeppelinstrasse 63, D-8000 München 80 (DE)**

---

(54) Parachute comportant une voilure en forme d'aile.

㉗ Parachute comportant d'une part une voilure souple en forme d'aile comprenant
- une paroi supérieure flexible formant une surface extrados,
- des nervures planes (4) fixées à la paroi supérieure et reliées entre elles par une paroi inférieure flexible formant une surface intrados sensiblement plane, lesdites nervures (4) allant de la partie avant de la voilure jusqu'à la partie arrière et délimitant entre la paroi supérieure et la paroi inférieure des cellules et d'autre part des suspentes (11) reliées par des moyens de liaison (10) à des nervures (4) et servant à suspendre une charge caractérisé en ce que chaque nervure (4) supportant des suspentes (11) est constituée d'un tissu dont les fils de trame (12) et les fils de chaîne (13) font au voisinage de chacune des suspentes (11) des angles compris entre 30° et 60° avec le prolongement de la suspente (11) considérée.

Les efforts se transmettent entre l'intrados et l'extrados par les fils de trame et de chaîne; on peut éviter l'emploi de rubans pour accroître la résistance des nervures, si bien que le poids du parachute ainsi que son coût de fabrication sont diminués.

---

- 1 -

Parachute comportant une voilure en forme d'aile.

La présente invention a trait à un parachute comportant d'une part une voilure souple en forme d'aile comprenant
- une paroi supérieure flexible formant une surface extrados,
- des nervures planes fixées à la paroi supérieure et reliées entre elles par une paroi inférieure flexible formant une surface intrados sensiblement plane,
lesdites nervures allant de la partie avant de la voilure jusqu'à la partie arrière et délimitant entre la paroi supérieure et la paroi inférieure des cellules
et d'autre part des suspentes reliées par des moyens de liaison à des nervures et servant à suspendre une charge.

De tels parachutes sont décrits par exemple dans le document FR-A-2 079 155 et dans le document US-A-3 972 495.

Dans les parachutes connus, les nervures sont en tissu et pour éviter les risques de déchirure dus aux efforts exercés par les suspentes, il est nécessaire de les renforcer par des rubans allant du haut en bas des nervures et permettant de répartir les contraintes de l'intrados vers l'extrados.

L'objet de l'invention est de supprimer ces rubans en conservant une bonne solidité ce qui permet de diminuer le poids, le volume et le coût de fabrication du parachute.

Le parachute selon l'invention est caractérisé en ce que chaque nervure supportant des suspentes est constituée d'un tissu dont les fils de trame et les fils de chaîne font au voisinage de chacune des suspentes des angles compris entre 30° et 60° avec le prolongement de la suspente considérée.

Grâce aux nervures selon l'invention, les contraintes transmises par les suspentes se décomposent entre les fils de chaîne et les fils de trame qui les transmettent à l'extrados. De plus, dans les directions où les contraintes sont exercées, le tissu présente une élasticité qui évite les à-coups provoquant des ruptures.

L'invention est encore applicable a un parachute comportant d'une part une voilure souple en forme d'aile comprenant une paroi supérieure flexible formant une surface extrados, des nervures planes fixées à la paroi supérieure allant de la partie avant à la partie arrière de la paroi supérieure, lesdites nervures s'étendant vers le bas et se rejoignant par paire à leur partie inférieure selon une arête inférieure délimitant ainsi des cellules de section triangulaire et d'autre part des suspentes reliées par des moyens de liaison aux paires de nervures et servant à suspendre une charge.

Selon l'invention, chaque nervure supportant des suspentes est constituée d'un tissu dont les fils de trame et les fils de chaîne font au voisinage de chacune des suspentes des angles compris entre 30° et 60° avec la projection p du prolongement de la suspente considérée sur le plan de ladite nervure.

L'invention est également applicable à un parachute comportant d'une part

- une paroi supérieure flexible formant une surface extrados
- des nervures planes verticales fixées à la paroi supérieure et s'étendant de la partie avant de la voilure à la partie arrière et de la paroi supérieure à une arête inférieure, lesdites nervures délimitant des canaux d'écoulement d'air et d'autre part des suspentes reliées par des moyens de liaison aux nervures et servant à suspendre une charge.

Selon l'invention chaque nervure est constituée de tissu dont les fils de trame et les fils de chaîne font au voisinage de chacune des suspentes des angles compris entre 30° et 60° avec le prolongement de la suspente considérée.

La présente invention sera mieux comprise à la lumière de la description qui va suivre dans laquelle

La figure 1 représente un premier type de parachute connu.

La figure 2 représente une nervure du parachute de la figure 1.

La figure 3 représente un deuxième type de parachute connu.

La figure 4 représente une nervure du parachute de la figure 2.

La figure 5 représente une nervure selon l'invention.

La figure 6 représente la décomposition des forces dans les nervures selon l'invention.

La figure 7 représente un autre type de nervure selon l'invention.

La figure 8 représente une laize de tissu dans laquelle sont découpées les nervures.

Les figures 9 et 10 représentent des nervures selon l'invention en plusieurs pièces.

Les figures 11 à 13 représentent d'autres types de parachute munis des nervures selon l'invention.

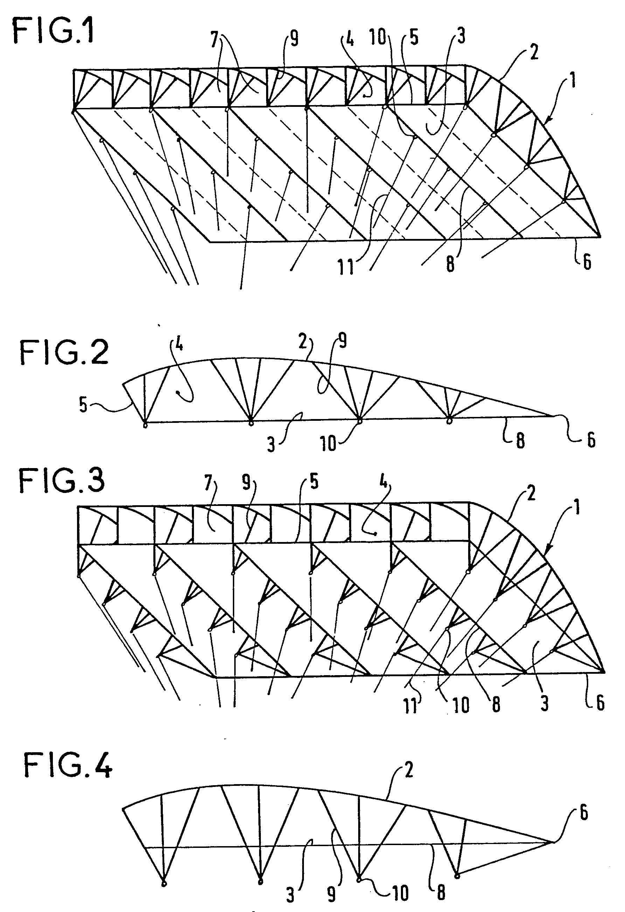

La figure 1 représente un parachute connu. Il comporte une voilure 1 en forme d'aile comportant une paroi supérieure flexible en tissu 2 constituant une surface extrados et une paroi inférieure flexible en tissu 3 constituant une surface intrados.

Des nervures verticales en tissu 4 espacées régulièrement sont voisines aux parois 2 et 3. Ces nervures 4 vont de la partie avant 5 ou bord d'attaque de la voilure au bord de fuite arrière 6 où se rejoignent les deux parois 2 et 3. Elles déterminent avec les parois 2 et 3 une suite de cellules 7 ouvertes à l'avant dans lesquelles s'engouffre l'air.

Les nervures 4 sont reliées à la paroi 3 selon une ligne de jonction 8.

Chaque nervure 4 est renforcée par des rubans 9 répartissant les efforts de la paroi 3 vers la paroi 2.

Ces rubans 9 divergent d'un point de la ligne 8 de la paroi 3 vers la paroi 2. Les rubans 9 de certaines nervures 4 sont munis d'une bouclette 10 de fixation (voir la coupe d'une nervure 4 sur la figure 2).

Les nervures 4 munies de bouclettes 10 au nombre de une sur deux servent à supporter les suspentes 11. Ces suspentes 11 sont reliées à une charge.

La sustentation du parachute est assurée par un écoulement d'air tel que pour une aile d'avion d'un bord d'attaque à un bord de fuite permettant d'obtenir ainsi une bonne efficacité en vol plané et en maniabilité.

La figure 3 représente un second type de parachute comportant les mêmes éléments que le parachute de la figure 1 et qui ont été référencés par les mêmes chiffres.

Toutefois les rubans 9 au lieu de converger sur la ligne 8 de fixation de la nervure 4 sur la paroi 3 convergent en un point situé en dessous où ils forment une bouclette 10 permettant d'attacher les suspentes 11.

La nervure 4 reliée aux suspentes est représentée à la figure 4.

Dans le parachute représenté, une nervure sur deux ne comporte pas de rubans 9 et n'est pas reliée aux suspentes 9, mais sert seulement à relier intrados 3 et extrados 2.

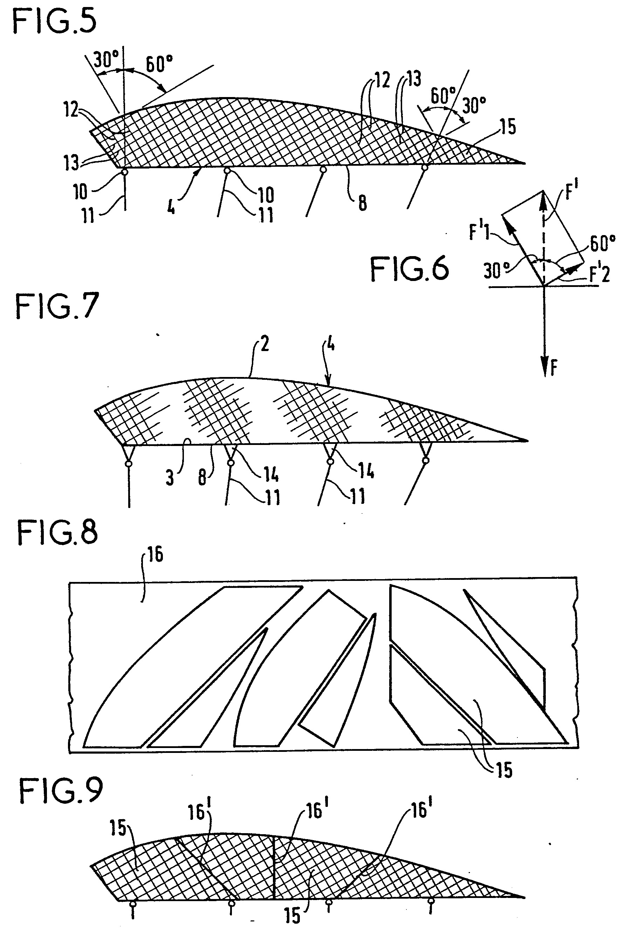

La nervure selon l'invention est représentée à la figure 5. Elle est constituée d'un tissu dont les fils de trame 12 et les fils de chaîne 13 font des angles compris entre 30° et 60° avec les prolongements des suspentes 11.

Ainsi en chaque point d'application d'une force F par une suspente sur la ligne 8 (voir figure 6), la force de réaction F' se décompose en deux forces F'1 selon les fils de trame et F'2 selon les fils de chaîne ce qui permet de répartir les efforts des bouclettes 10 vers la paroi supérieure 2.

Sur la figure 7 on a représenté une nervure 4 selon l'invention où les suspentes 11 sont reliées à des fixations rapportées 14 au bas de la nervure 4.

Ces fixations peuvent être du même tissu que la nervure et la prolonger.

Ces fixations 14 sont reliées par une succession de points à la nervure 4 répartissant ainsi les contraintes de la paroi inférieure 3 à l'aide des fils de chaîne et les fils de trame vers la paroi supérieure 2.

On remplacera donc, dans les parachutes des types décrits aux figures 1 et 3, les nervures avec leurs rubans par les nervures de la figure 7, lorsque ces nervures doivent supporter des suspentes 11.

Pour les nervures ne supportant pas de suspentes, on pourra également les remplacer par des nervures selon l'invention, ces nervures étant bien évidemment sans moyens de fixation.

Bien évidemment, toutes les nervures pourraient être réalisées pour supporter des suspentes.

La figure 8 représente un exemple de découpe de nervures en plusieurs pièces 15 lorsque ses dimensions sont trop importantes pour qu'elles soient découpées en une seule pièce dans la laize du tissu 16.

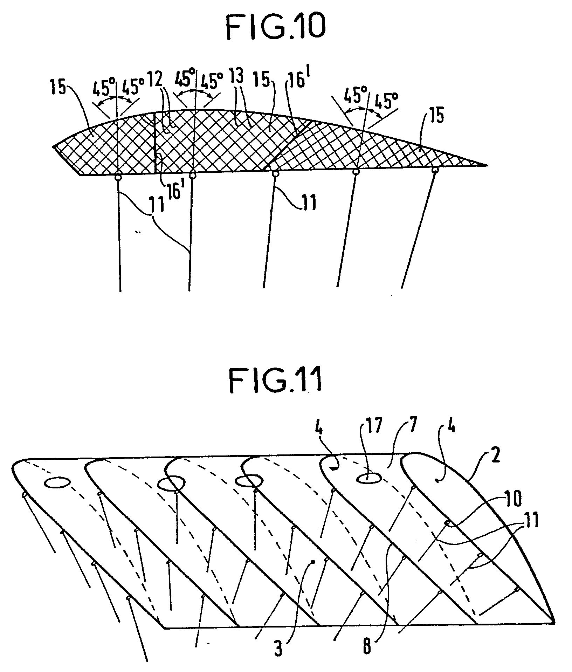

Les pièces 15 sont alors assemblées selon des lignes 16' pour constituer des nervures (voir figures 9 et 10).

Dans la nervure de la figure 9 les fils de chaîne et les fils de trame des diverses pièces 15 sont parallèles. Par contre dans la nervure de la figure 10, l'orientation de ces fils diffèrent pour chaque pièce 15.

Ainsi on peut orienter chaque pièce pour que les angles des fils de trame et de chaîne avec les prolongements (ou avec les projections des prolongements sur le plan de la nervure) des suspentes 11 fixées à la pièce considérée soient voisins de 45°, ce qui permet une décomposition des forces de traction des suspentes 11 en des forces égales selon les fils de trame et selon les fils de chaîne.

La nervure selon l'invention est également applicable (voir figure 11) à un parachute dont les cellules 7 déterminées par les nervures 4 et par les parois inférieure 3 et supérieure 2 ne sont pas totalement ouvertes à l'avant, mais ne comportent qu'une ouverture 17 relativement faible. Les suspentes 11 sont reliées à des moyens de fixation (bouclettes) 10 qui dans l'exemple représenté sont fixés aux bas de toutes les nervures 4.

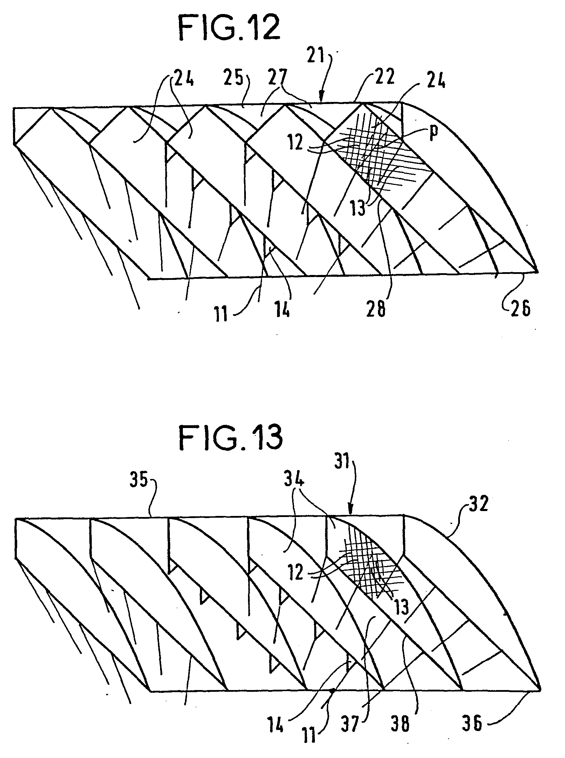

Selon un autre mode de réalisation du parachute, représenté à la figure 12, il n'y a pas de paroi inférieure. La voilure 21 du parachute comprend une paroi supérieure flexible 22 à laquelle sont fixées, espacées les unes des autres, des nervures 24 vers le bas. Ces nervures 24 vont de la partie avant 25, ou bord d'attaque, au bord arrière 26, ou bord de fuite. Les nervures sont dirigées vers le bas et chaque paire consécutive se rejoint selon une arête inférieure 28 délimitant ainsi des cellules de section triangulaire 27.

Les suspentes 11 sont fixées aux arêtes 28 par des moyens de fixation 14 qui peuvent être de tout type.

Les fils de chaîne et les fils de trame de chaque nervure 24 doivent faire des angles compris entre 30° et 60° avec les projections p des prolongements des suspentes 11 sur le plan de la nervure considérée.

Enfin la nervure selon l'invention peut être appliquée à un parachute ayant une voilure 31 comprenant une paroi supérieure 32 et des nervures verticales 34 fixées à la paroi 32, mais pas de paroi inférieure.

Ces nervures 34 s'étendent de la partie avant 35, ou bord d'attaque, à la partie arrière, ou bord de fuite 36, et déterminent avec la paroi 32 des canaux d'écoulement d'air 37.

Ces nervures s'étendent vers le bas jusqu'à une arête 38.

Des suspentes 11 sont fixées sur les arêtes 38 ou au voisinage des arêtes 38 par des moyens de fixation 14 de tous types.

Les nervures sont en tissu avec des fils de chaîne et des fils de trame faisant des angles compris entre 30° et 60° pour que les efforts soient transmis des moyens de fixation 14 par les fils de chaîne et de trame vers la paroi 32.

REVENDICATIONS

1/ Parachute comportant d'une part une voilure souple (1) en forme d'aile comprenant

- une paroi supérieure flexible (2) formant une surface extrados,

- des nervures planes (4) fixées à la paroi supérieure (2) et reliées entre elles par une paroi inférieure flexible (3) formant une surface intrados,

lesdites nervures (4) allant de la partie avant (5) de la voilure (1) jusqu'à la partie arrière (6) et délimitant entre la paroi supérieure (2) et la paroi inférieure (3) des cellules (7)

et d'autre part des suspentes (11) reliées par des moyens de liaison (10, 14) à des nervures (4) et servant à suspendre une charge caractérisé en ce que

chaque nervure (4) supportant des suspentes (11) est constituée d'un tissu dont les fils de trame (12) et les fils de chaîne (13) font au voisinage de chacune des suspentes (11) des angles compris entre 30° et 60° avec le prolongement de la suspente (11) considérée.

2/ Parachute comportant d'une part une voilure souple (21) en forme d'aile comprenant une paroi supérieure (22) flexible formant une surface extrados, des nervures planes (24) fixées à la paroi supérieure (22) allant de la partie avant (25) à la partie arrière (26) de la paroi supérieure (22), lesdites nervures (24) s'étendant vers le bas et se rejoignant par paire à leur partie inférieure selon une arête inférieure (28) délimitant ainsi des cellules (27) de section triangulaire et d'autre part des suspentes (11) reliées par des moyens de liaison (14) aux paires de nervures (24) et servant à suspendre une charge caractérisé en ce que chaque nervure (24) supportant des suspentes (11) est constituée d'un tissu dont les fils de trame (12) et les fils de chaîne (13) font au voisinage de chacune des suspentes (11) des angles compris entre 30° et 60° avec la projection p du prolongement de la suspente (11) considérée sur le plan de ladite nervure (24).

3/ Parachute comportant d'une part une voilure souple en forme d'aile comprenant

- une paroi supérieure flexible (32) formant une surface extrados

- des nervures planes verticales (34) fixées à la paroi supérieure (32) et s'étendant de la partie avant (35) de la voilure (31) à la partie arrière (36) et de la paroi supérieure (32) à une arête inférieure (38), lesdites nervures (34) délimitant des canaux d'écoulement d'air (37) et d'autre part des suspentes (11) reliées par des moyens de liaison (14) aux nervures (34) et servant à suspendre une charge,

caractérisé en ce que chaque nervure (34) est constituée de tissu dont les fils de trame (12) et les fils de chaîne (13) font au voisinage de chacune des suspentes (11) des angles compris entre 30° et 60° avec le prolongement de la suspente (11) considérée.

4/ Parachute selon l'une des revendications 1 et 3, caractérisée en ce que chaque nervure (4, 34) supportant des suspentes (11) est constituée de plusieurs pièces (15) raccordées.

5/ Parachute selon la revendication 4, caractérisé en ce que les fils de trame (12) et de chaîne (13) sont inclinés différemment dans les diverses pièces (15) et forment des angles voisins de 45° avec les prolongements des suspentes (11).

6/ Parachute selon la revendication 2, caractérisé en ce que chaque nervure (24) supportant des suspentes (11) est constituée de plusieurs pièces (15) raccordées.

7/ Parachute selon la revendication 6, caractérisé en ce que les fils de trame (12) et de chaîne (13) sont inclinés différemment dans les diverses pièces (15) et forment des angles voisins de 45° avec les projections p des prolongements des suspentes (11) sur le plan de la nervure (24) considérée.

1/4      0163966

FIG.1

FIG.2

FIG.3

FIG.4

FIG.5

FIG.6

FIG.7

FIG.8

FIG.9

## FIG.10

## FIG.11

# FIG.12

# FIG.13

0163966

**Office européen des brevets**

**RAPPORT DE RECHERCHE EUROPEENNE**

Numero de la demande

EP 85 10 5552

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | US-A-3 589 653 (SLATER) <br> * Colonne 2, lignes 53-67; colonne 3, ligne 57 - colonne 4, ligne 12 * | 1 | B 64 D 17/00 |
| A | GB-A- 199 104 (DEMOCRATIS) <br> * Page 1; revendications 1,2 * | 1 | |
| A | US-A-2 465 409 (WEINIG) <br> * Colonne 1, ligne 57 - colonne 2, ligne 7 * | 1 | |
| A | US-A-3 428 277 (EVERETT) <br> * Figure 5 * | 1 | |
| D,A | FR-A-2 079 155 (SNYDER) <br> * Figures 1,4 * | 2 | DOMAINES TECHNIQUES RECHERCHES (Int. Cl.4) |
| D,A | FR-A- 917 169 (FRIEDER) <br> * Resumé, figure 9 * | 4,5 | B 64 D <br> B 64 C |
| A | GB-A-1 086 126 (JALBERT) | | |
| D,A | US-A-3 972 495 (JALBERT) | | |

Le present rapport de recherche a été établi pour toutes les revendications

| Lieu de la recherche | Date d'achevement de la recherche | Examinateur |
|---|---|---|
| LA HAYE | 21-08-1985 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arriere-plan technologique
O : divulgation non-ecrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82